# EUROPEAN PATENT SPECIFICATION

(11) **EP 4 020 056 B1**
(45) Date of publication and mention of the grant of the patent: **28.01.2026**
(21) Application number: 20857463.2
(22) Date of filing: 08.07.2020
(51) Int. Cl.: G02B 27/00, G02B 27/09, G02B 26/10, G02B 5/18, G02B 27/01, G02B 1/00

(54) **OPTICAL COMBINER IN AUGMENTED REALITY AND RELATED DEVICE**
OPTISCHER KOMBINATOR IN ERWEITERTER REALITÄT UND ZUGEHÖRIGE VORRICHTUNG
COMBINATEUR OPTIQUE EN RÉALITÉ AUGMENTÉE ET DISPOSITIF ASSOCIÉ

(30) Priority: 29.08.2019 CN 201910810425
(43) Date of publication of application: 29.06.2022
(73) Proprietor: Huawei Technologies Co., Ltd., Longgang District Shenzhen, Guangdong 518129 (CN)
(72) Inventor: GUO, Rui, Shenzhen, Guangdong 518129 (CN); LI, Gen, Shenzhen, Guangdong 518129 (CN); LI, Shujie, Shenzhen, Guangdong 518129 (CN); GENG, Dongyu, Shenzhen, Guangdong 518129 (CN); TU, Minhai, Shenzhen, Guangdong 518129 (CN)
(74) Representative: Maiwald GmbH
(86) International application number: PCT/CN2020/100827
(87) International publication number: WO 2021/036525

(56) References cited:
- WO-A1-2017/137127
- CN-A- 105 676 314
- CN-A- 108 227 072
- CN-A- 109 188 688
- CN-A- 110 133 758
- CN-A- 110 161 678
- US-A1- 2017 047 499
- US-A1- 2017 090 221
- US-A1- 2019 033 683
- US-A1- 2019 079 321
- GUN-YEAL LEE ET AL: "Metasurface eyepiece for augmented reality", NATURE COMMUNICATIONS, vol. 9, no. 1, 1 November 2018 (2018-11-01), XP055590353, DOI: 10.1038/s41467-018-07011-5
- DITCOVSKI RAN ET AL: "Full-color optical combiner based on multilayered metasurface design", SPIE PROCEEDINGS; [PROCEEDINGS OF SPIE ISSN 0277-786X], SPIE, US, vol. 10942, 1 March 2019 (2019-03-01), pages 109420S - 109420S, XP060118347, ISBN: 978-1-5106-3673-6, DOI: 10.1117/12.2510273
- JACOB SCHEUER: "Metasurfaces-based holography and beam shaping: engineering the phase profile of light", NANOPHOTONICS, 11 August 2016 (2016-08-11), pages 137 - 152, XP055684417, Retrieved from the Internet <URL:https://www.degruyter.com/view/journals/nanoph/6/1/article-p137.xml> [retrieved on 20200408], DOI: 10.1515/nanoph-2016-0109

## Description

### TECHNICAL FIELD

This application relates to the field of augmented reality technologies, and in particular, to an optical combiner and a related device for augmented reality.

### BACKGROUND

In recent years, an augmented reality (AR) display technology has been used for increasing electronic devices. For example, new products that use the AR display technology have emerged, such as AR glasses and vehicle-mounted head-up displays. In a product that uses the AR display technology, an optical combiner (optical combiner) is used to combine a virtual image and a real scene to form a realistic effect of augmented reality. Therefore, the optical combiner is a core component of the AR display technology.

WO2017/137127A1 relates to an optical combiner comprising an array of pairs of resonating waveguide gratings. It is described that the waveguiding layer of the array, comprising the resonating waveguide gratings, is configured to guide at most ten guided light modes in the visible wavelength range, and at least a portion of the resonating waveguide grating array is configured to incouple a portion of incident light on said array and to coupled out a fraction of that incident light. It is described that the outcoupled fraction has a predetermined wavelength λ in said visible and near-infrared wavelength range and has a predetermined spectral width Δλ.

At present, in an implementation principle, the optical combiner is implemented through reflection and transmission of light. A non-diffractive optical element (for example, a beam splitter) is used to reflect a virtual image optical signal emitted by an optical engine, and transmit visible light in a real scene at the same time. Reflected light and transmitted light enter human eyes together to form a combined picture. Such a manner features a simple structure, but a virtual image picture in the human eyes has a small field of view, and a visible light transmittance is low. In another implementation principle, the optical combiner is implemented through diffraction and transmission of light. Two optical elements (for example, optical gratings or reliefs) with a diffraction function are used. One of the diffraction elements is configured to couple, to an optical waveguide, a virtual image optical signal emitted by an optical engine, and the other diffraction element is configured to couple and output the optical signal coupled to the optical waveguide. The output optical signal and transmitted natural light in a real scene enter human eyes together to form a combined picture. Because an optical grating is sensitive to a wavelength, color crosstalk is prone to occur, and low image uniformity is caused.

Therefore, it is necessary to solve problems in the conventional technology that a virtual image picture of an optical combiner has a small field of view, a low ambient light transmittance, and low image uniformity.

### SUMMARY

In view of this, this application provides an optical combiner and a related device for augmented reality.

Appended claim 1 defines an optical combiner. Appended claim 11 defines an augmented reality device. Appended claim 12 defines an augmented reality device. The invention and its scope of protection is defined by these claims. The aspects and implementations of the disclosure provide non-limiting examples of how technical subject matters can be combined.

According to a first aspect, this application provides an optical combiner, including a transparent substrate and a metasurface layer, the metasurface layer is disposed on a surface of the transparent substrate, and the metasurface layer includes a plurality of metasurface units arranged two-dimensionally. A spacing between two adjacent metasurface units in the plurality of metasurface units gradually changes along one or two dimensions, and a relative angle between any two adjacent metasurface units is not zero.

The spacing between two adjacent metasurface units gradually changes along one or two dimensions, and the relative angle between any two adjacent metasurface units is not zero, so that the optical combiner can increase a field of view of a virtual image picture, and increase an ambient light transmittance and image uniformity.

In a possible implementation, the metasurface layer includes a plurality of regions, and optical signals corresponding to different regions have different emergent angles, so that optical signals emergent at different angles converge to one point. For example, the spacing between two adjacent metasurface units varies with a region of the metasurface layer, and the convergence point inclines towards a region with a smaller spacing. The plurality of regions of the metasurface layer may be physically divided or logically divided. The optical signals corresponding to different regions may have different incident angles and emergent angles, thereby increasing the field of view of the virtual image picture.

The metasurface layer is configured to reflect optical signals in a narrow-linewidth band and transmit optical signals in a broad-linewidth band. The narrow-linewidth band is a band that has a relatively narrow spectral range. The optical signals in the narrow-linewidth band comprise red, green, and blue wavelengths.

The signals in the narrow-linewidth band are used to carry a virtual image. The optical signals in the broad-linewidth band comprise ambient light or visible light, and are used to carry a realistic image. The arrangement and design of the metasurface units in the metasurface layer enable the optical combiner to reflect all of the optical signals carrying the virtual image, so as to increase the ambient light transmittance of the optical combiner, thereby increasing image uniformity.

In a possible implementation, the spacing between two adjacent metasurface units gradually increases or decreases along one or two dimensions.

The spacing between two adjacent metasurface units may gradually change along a horizontal direction or a vertical direction of the metasurface units, and may change linearly or nonlinearly. or decreases along one or two dimensions.

The spacing between two adjacent metasurface units may gradually change along a horizontal direction or a vertical direction of the metasurface units, and may change linearly or nonlinearly.

In a possible implementation, a relative angle between two adjacent metasurface units gradually changes along one or two dimensions.

The angle between two adjacent metasurface units may gradually change along the horizontal direction or the vertical direction of the metasurface units, and may change linearly or nonlinearly.

In a possible implementation, an area of the metasurface unit gradually changes along one or two dimensions.

The area of the metasurface unit may gradually change along the horizontal direction or the vertical direction of the metasurface units, and may change linearly or nonlinearly.

In a possible implementation, the metasurface layer includes at least two layers of materials having different refractive indexes.

An emergent angle of incident light can be adjusted to increase the field of view by designing aspects such as the spacing and the angle between two adjacent metasurface units, the area of the metasurface unit, and the materials of the metasurface layer.

In a possible implementation, the optical combiner further includes a transparent conductive layer, the metasurface layer is disposed on the transparent conductive layer, and the transparent conductive layer is configured to control reflection angles of optical signals on the metasurface layer.

In a possible implementation, a refractive index adjustment and control layer is covered on the metasurface layer, and the refractive index adjustment and control layer is configured to adjust a refractive index of the metasurface layer to control the reflection angles of the optical signals on the metasurface layer.

With the transparent conductive layer or the refractive index adjustment and control layer, the emergent angle of the incident light can be dynamically adjusted, and a focal length and a depth of field can be further dynamically adjusted.

According to a second aspect, this application provides an augmented reality AR device, including the optical combiner according to any one of the first aspect or the possible implementations of the first aspect, at least one light projector, and a fixing apparatus. The fixing apparatus is configured to fix the optical combiner and the at least one light projector, the optical combiner is configured to reflect the optical signals in the narrow-linewidth band that are generated by the at least one light projector and transmit the optical signals in the broad-linewidth band.

According to a third aspect, this application provides an augmented reality AR device, including the optical combiner according to any one of the first aspect or the possible implementations of the first aspect and at least one light projector. The optical combiner is configured to reflect the optical signals in the narrow-linewidth band that are generated by the at least one light projector and transmit the optical signals in the broad-linewidth band.

The optical combiner in this application may be used in AR devices such as AR glasses, AR helmets, vehicle-mounted head-up displays, automobile windshields, transparent displays, and various types of transparent curtain walls including laser projections. The optical combiner can increase a field of view of a virtual image picture, and increase an ambient light transmittance and image uniformity.

### BRIEF DESCRIPTION OF DRAWINGS

To describe technical solutions in embodiments of the present invention, the following briefly describes accompanying drawings used to describe the embodiments.
FIG. 1 is a schematic structural diagram of an AR device according to an embodiment of the present invention;
FIG. 2a to FIG. 2c are schematic structural diagrams of AR glasses according to an embodiment of the present invention;
FIG. 3a and FIG. 3b are schematic diagrams of a principle of an optical combiner according to an embodiment of the present invention;
FIG. 4a and FIG. 4b are schematic structural diagrams of an optical combiner according to an embodiment of the present invention;
FIG. 5 shows reflection spectra of an optical combiner for incident light at an angle of 0 degrees and incident light at an angle of 45 degrees according to an embodiment of the present invention;
FIG. 6 is a schematic diagram of a logical structure of an optical combiner according to an embodiment of the present invention;
FIG. 7a to FIG. 7j are schematic diagrams of eight designs of an optical combiner according to an embodiment of the present invention;
FIG. 8a to FIG. 8i are schematic diagrams of nine designs of an optical combiner according to an embodiment of the present invention;
FIG. 9 is a schematic diagram of a design of an optical combiner according to an embodiment of the present invention;
FIG. 10a to FIG. 10c are schematic diagrams of a design of an optical combiner according to an embodiment of the present invention; and
FIG. 11a to FIG. 11c are schematic diagrams of a design of an optical combiner according to an embodiment of the present invention.

### DESCRIPTION OF EMBODIMENTS

The following further describes the present invention in detail with reference to the accompanying drawings and embodiments.

The technical solutions in the embodiments of the present invention may be applied to any scenario related to an AR display technology, for example, AR glasses, AR helmets, vehicle-mounted head-up displays, automobile windshields, transparent displays, and various transparent curtain walls including laser projections. The technical solutions may be further applied to scenarios such as virtual reality (Virtual Reality, VR) and mediated reality (Mediated Reality, MR) display. AR glasses are used as an example for description in the embodiments of the present invention.

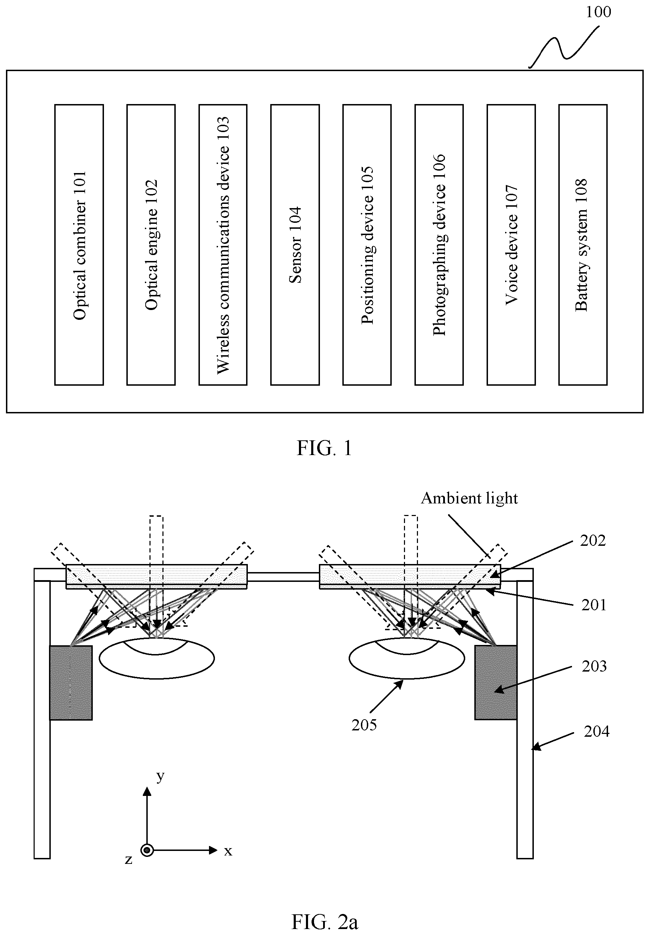

FIG. 1 is a schematic structural diagram of an AR device according to an embodiment of the present invention. As shown in FIG. 1, an AR device 100 may include an optical combiner 101, an optical engine 102, a wireless communications device 103, a sensor 104, a positioning device 105, a photographing device 106, a voice device 107, a battery system 108, and the like. Certainly, some modules shown in FIG. 1 are examples and are not mandatory components. The AR device 100 may alternatively include modules not shown in FIG. 1. The optical combiner 101 may include a transparent substrate (which may be made of, for example, glass, resin, or another transparent material) and a metasurface layer, and is configured to reflect or transmit optical signals (for carrying virtual image information) emitted by the optical engine 102 and optical signals (for carrying realistic image information) in a real environment to human eyes. The optical engine 102 may be a light projector or a laser, and is configured to generate the optical signals for carrying the virtual image information. The wireless communications device 103 is configured to send and receive wireless signals. For example, the wireless communications device 103 may be Wi-Fi, Bluetooth, or a mobile communications apparatus. The sensor 104 may include a power sensor (for example, a gyroscope), a biosensor, a temperature sensor, a humidity sensor, and the like. The positioning device 105 may include a GPS or Beidou positioning device. The photographing device 106 may include a camera, an image processor, and the like, and is configured to take photos or videos. The voice device 107 may be configured to input or output sound. For example, the voice device 107 may be a microphone or a speaker. The battery system 108 is configured to supply power to the AR device.

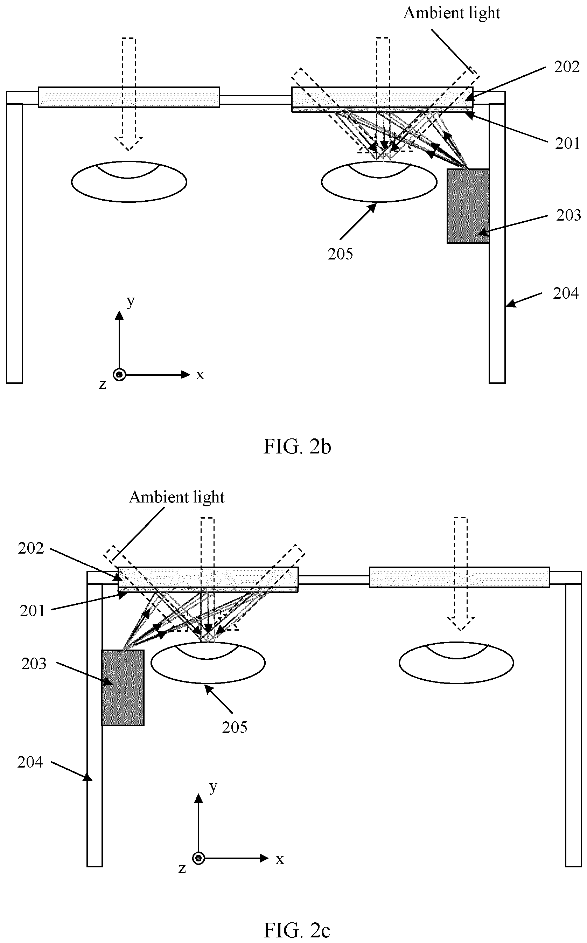

FIG. 2a to FIG. 2c are schematic structural diagrams of AR glasses according to an embodiment of the present invention. As shown in FIG. 2a to FIG. 2c, the AR glasses may include a metasurface layer 201, a transparent substrate 202 (lenses), an optical engine 203, and a fixing apparatus 204 (a glass frame). An optical combiner may include the metasurface layer 201 and the transparent substrate 202, and the metasurface layer 201 may be disposed on a surface of the transparent substrate 202. The optical combiner 203 may be located on both sides of the fixing apparatus 204, or may be located on either side of the fixing apparatus 204. The optical engine 203 may be a laser or a light projector, and is configured to generate optical signals for carrying a virtual image, and project the optical signals onto the optical combiner. The optical combiner 203 transmits ambient light or visible light (for carrying realistic image information) to human eyes 205, and reflects or diffracts the optical signals (for carrying virtual image information) generated by the optical engine 203 to the human eyes 205, so as to achieve an effect of combining a realistic image with the virtual image at the human eyes. A principle and a structure of the optical combiner are described in detail below.

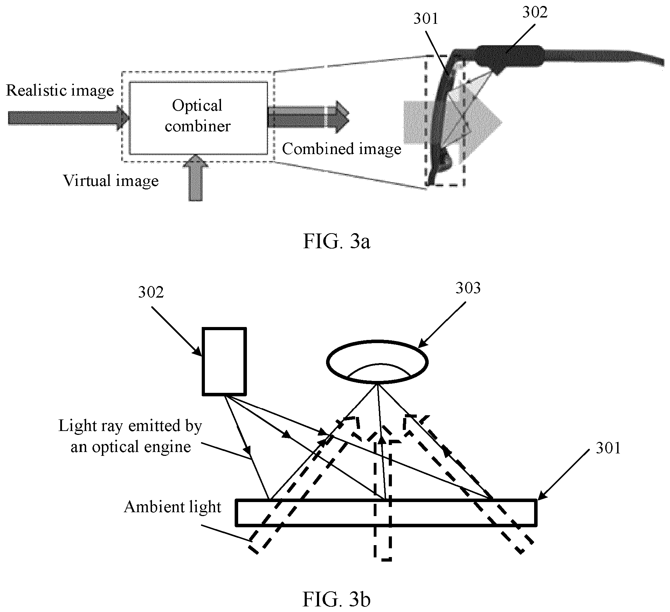

FIG. 3a and FIG. 3b are schematic diagrams of a principle of an optical combiner according to an embodiment of the present invention. The optical combiner may be applied to the AR glasses shown in any one of FIG. 2a to FIG. 2c. As shown in FIG. 3a and FIG. 3b, an optical combiner 301 transmits almost all of ambient light or visible light from each direction that carries realistic image information, and reflects almost all of optical signals that carry virtual image information and that are generated by an optical engine 302. The optical combiner 301 may send all optical signals of all wavelengths that are generated by the optical engine 302 to human eyes 303, without affecting the transmission of ambient light. In this way, a realistic image and a virtual image are combined, thereby implementing augmented display of the realistic image.

In this embodiment of the present invention, the optical combiner has a relatively high transmittance for ambient light and therefore increases image uniformity. Because the optical combiner has a relatively high reflectivity for the optical signals of the virtual image, the optical combiner can reduce power consumption of the AR glasses and decrease a volume of the AR glasses. In addition, because the optical combiner reflects almost all of the optical signals of the virtual image, an onlooker cannot see content of the virtual image, thereby effectively improving privacy performance of the AR glasses.

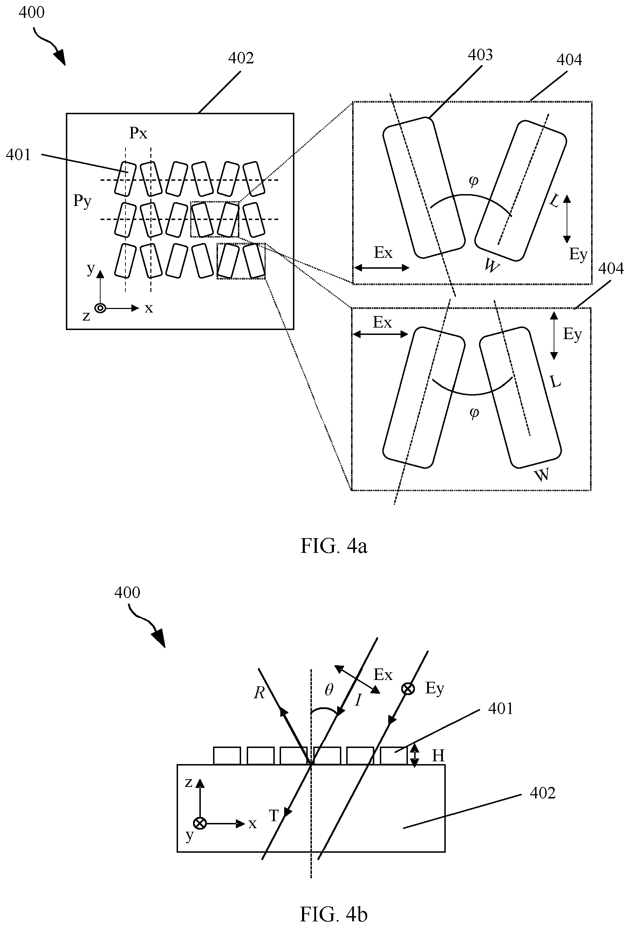

FIG. 4a and FIG. 4b are schematic structural diagrams of an optical combiner according to an embodiment of the present invention. The optical combiner may be applied to the AR glasses shown in any one of FIG. 2a to FIG. 2c. FIG. 4a is a top view (an x-y plane), and FIG. 4b is a front view (an x-z plane). As shown in FIG. 4a and FIG. 4b, an optical combiner 400 may include a metasurface layer 401 and a transparent substrate 402. The metasurface layer 401 is disposed on a surface of the transparent substrate 402. The optical combiner 400 may include one or more metasurface layers 401. The metasurface layer 401 may be an artificial layered material whose size is less than or equal to an operating wavelength of the metasurface layer 401. For example, the material of the metasurface layer 401 may be a material that is transparent to a visible light band, for example, titanium oxide or silicon nitride. The metasurface layer 401 can flexibly adjust one or more characteristics such as electromagnetic wave polarization, an amplitude, a phase, a polarization manner, and a propagation mode, and has characteristics different from those of natural materials. The transparent substrate 402 may use a transparent material such as glass or resin, and is equivalent to lenses of the AR glasses. As shown in FIG. 4a, the metasurface layer 401 includes a plurality of metasurface units 403, and two adjacent metasurface units 403 form one metasurface unit pair 404. Certainly, if a quantity of the metasurface units is odd, one metasurface unit cannot be paired. Two metasurface units 403 of each metasurface unit pair 404 are arranged in a V-shape or an inverted-V shape. Metasurface unit pairs 404 in the metasurface layer 401 are all arranged in the inverted-V shape, of are all arranged in the V shape, or some of the metasurface unit pairs 404 are arranged in the inverted-V shape and the other of the metasurface unit pairs 404 are arranged in the V shape, so as to ensure that an angle *φ* between the two adjacent metasurface units is not zero. The plurality of metasurface units 403 of the metasurface layer 401 may be periodically arranged on a two-dimensional plane. A spacing between two adjacent metasurface units 403 gradually changes along one or two dimensions, for example, changes along an x direction or a y direction. A spacing Px between two metasurface units 403 in one metasurface unit pair 404 may be less than a spacing between two adjacent metasurface unit pairs. The metasurface unit 404 may be rectangular, elliptical, trapezoidal, or the like. One or more sizes of a length, a width, and a height of the metasurface unit 403 are less than or equal to an operating wavelength (that is, a wavelength of incident light, transmitted light, or reflected light) of the metasurface unit 403, so as to excite different electric field patterns for the incident light. For example, a value range of the width W of the metasurface unit may be 5 nm to 5000 nm, a value range of the length L of the metasurface unit may be 5 nm to 5000 nm, an included angle *φ* between two adjacent metasurface units is not zero and a value range may be -180 to +180 (excluding 180 and -180), a value range of a central spacing Px between two adjacent metasurface units in a horizontal direction (the x direction) may be 5 nm to 5000 nm, and a value range of a central spacing Py between two adjacent metasurface units in a vertical direction (the y direction) may be 5 nm to 5000 nm. As shown in FIG. 4b, a value range of the height H of the metasurface unit may be 5 nm to 5000 nm. In an example, a value of L is 260 nm, a value of W is 60 nm, a value of H is 230 nm, a value of Px is 230 nm, a value of Py is 280 nm, and a value of *φ* is 20 degrees.

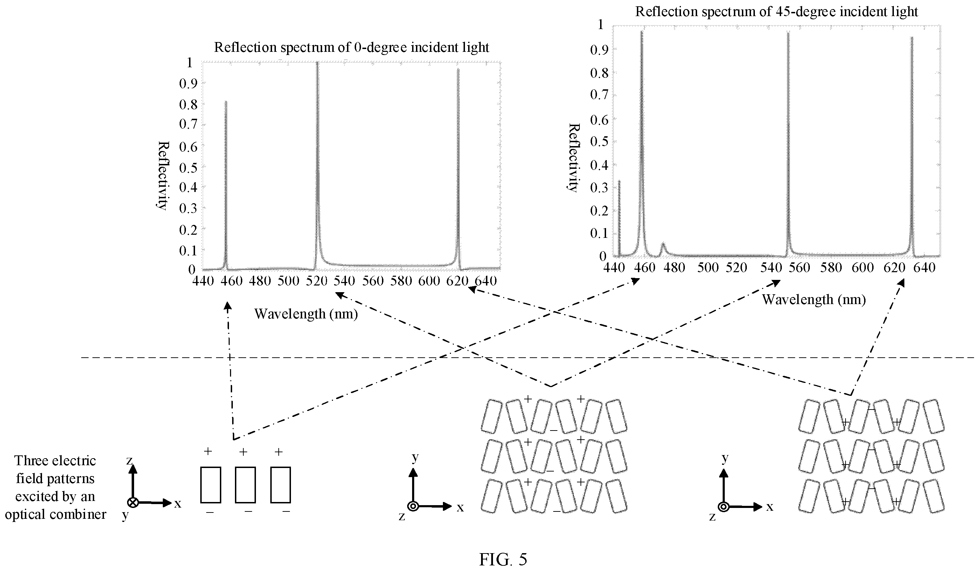

The optical combiner provided in this embodiment of the present invention can have a high reflectivity for optical signals in the narrow-linewidth band (the optical signals emitted by the optical engine), and reflect almost all of the optical signals; and have an extremely low reflectivity for ambient light in the broad-linewidth band, and transmit almost all of the ambient light. The narrow-linewidth band refers to a band with a relatively narrow spectral range, and the narrow-linewidth band and the broad-linewidth band are relative to each other. A specific linewidth range is not limited in this embodiment of the present invention. FIG. 5 shows reflection spectra of an optical combiner for incident light at an angle of 0 degrees and incident light at an angle of 45 degrees according to an embodiment of the present invention. As shown in FIG. 5, the optical combiner has three narrow-linewidth bands with a high reflectivity separately for 0-degree incident light and 45-degree incident light. The three narrow-linewidth bands respectively correspond to three wavelengths generated by the optical engine: red (about 625 nm to 740 nm), green (about 500 nm to 565 nm), and blue (about 485 nm to 500 nm). The optical combiner has a reflectivity close to 1, and reflects almost all of the incident light. Three high reflection peaks in each of the reflection spectra are generated by three electric field patterns excited by the optical combiner in the narrow-linewidth bands, and the three electric field patterns can be generated at different positions of different metasurface layers. For example, a first electric field pattern is generated by upper and lower surfaces of the metasurface layer, a second electric field pattern is generated by a position that has a longer distance between two adjacent metasurface units (a lower portion of the inverted-V shape or an upper portion of the V shape), and a third electric field pattern is generated by a position that has a shorter distance between two adjacent metasurface units (an upper portion of the inverted-V shape or a lower portion of the V shape). If the optical combiner includes a plurality of metasurface layers, different metasurface layers may excite different electric field patterns.

In this embodiment of the present invention, the optical combiner uses a metasurface layer with a special structural design (an arrangement in the inverted-V shape or the V shape). The metasurface layer reflect all optical signals that carry a virtual image to further increase an ambient light transmittance of the optical combiner, thereby increasing image uniformity.

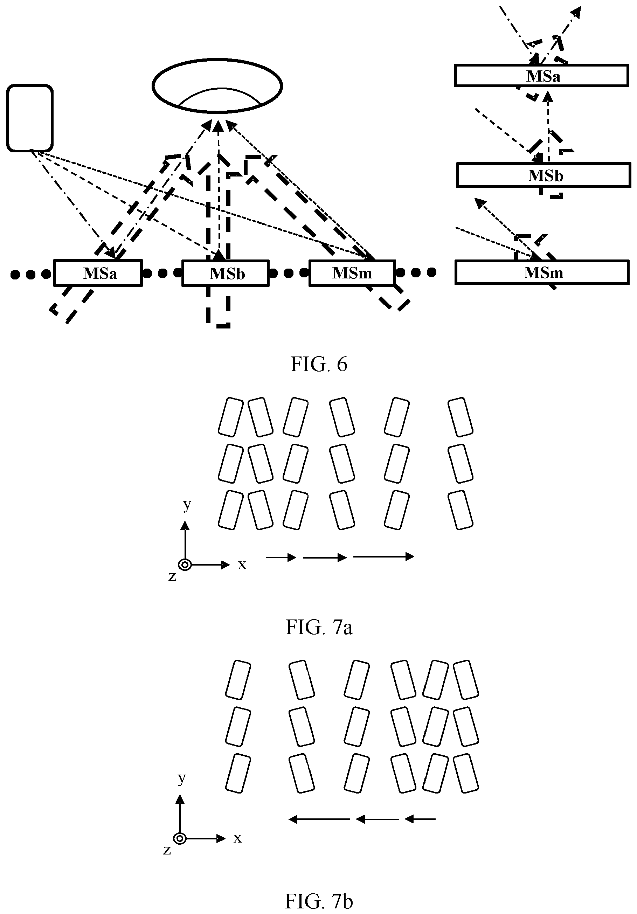

The metasurface layer not only features a high reflectivity in the narrow-linewidth band, but also enables an emergent angle of incident light to change with a region. FIG. 6 is a schematic diagram of a logical structure of an optical combiner according to an embodiment of the present invention. As shown in FIG. 6, the optical combiner needs to converge light rays incident at different angles to one place (human eyes). Therefore, the optical combiner may be divided into a plurality of regions to implement angle control in different regions. For example, the optical combiner includes a plurality of different regions: MSa (metasurface a), MSb, ..., and MSm. Each region corresponds to a different emergent angle. The emergent angle may be an emergent angle of a light ray emitted by the optical engine, or may be an emergent angle of ambient light. Each region may include a plurality of metasurface units, and a same metasurface unit may belong to a plurality of regions, or may belong to only one region. Different regions may be logically divided, but there may be no clear boundary physically.

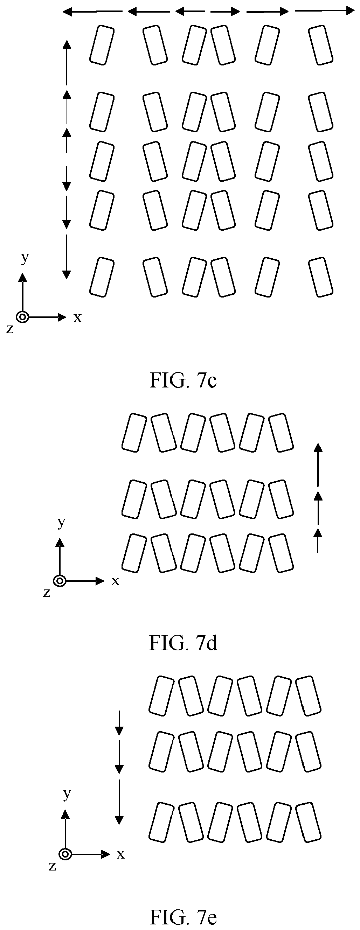

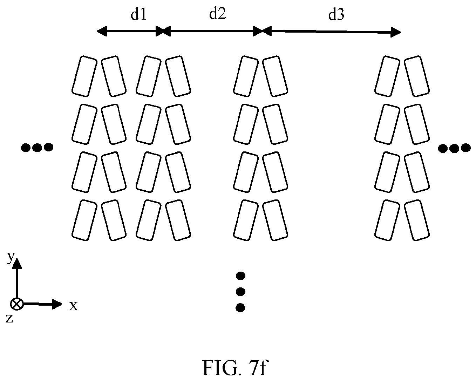

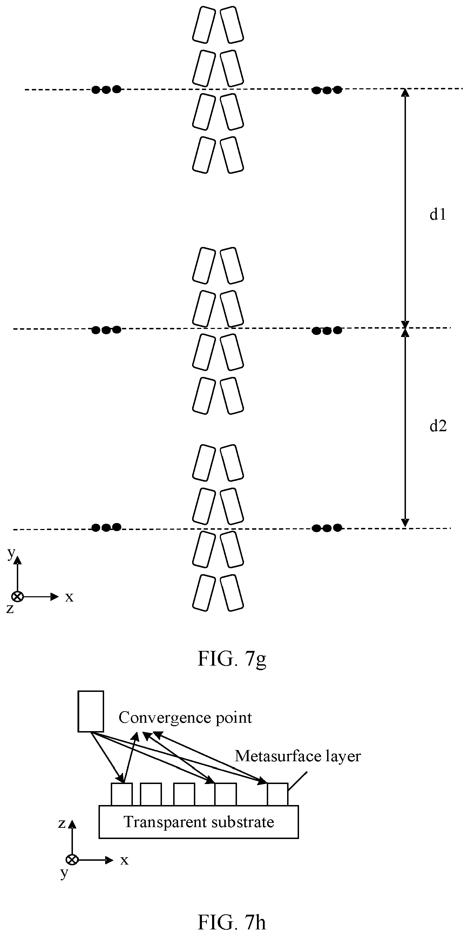

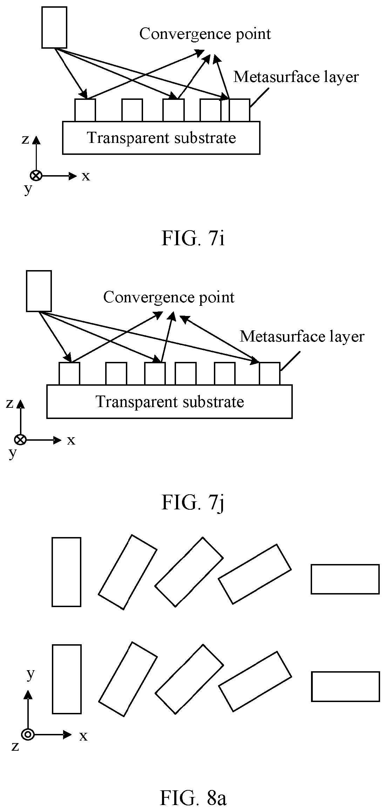

An emergent angle of a light ray on a metasurface layer may be controlled by changing a spacing between metasurface units. FIG. 7a to FIG. 7j are schematic diagrams of eight designs of an optical combiner according to an embodiment of the present invention. FIG. 7a to FIG. 7g illustrate five changing patterns on an x-y plane. As shown in FIG. 7a, in a horizontal direction (an x direction), a spacing between two adjacent metasurface units gradually increases from left to right. As shown in FIG. 7b, in a horizontal direction (an x direction), a spacing between two adjacent metasurface units gradually increases from right to left. As shown in FIG. 7c, in a horizontal direction (an x direction), a spacing between two adjacent metasurface units gradually increases from the middle to two sides, and in a vertical direction (a y direction), a spacing between two adjacent metasurface units gradually increases from the middle to two sides. As shown in FIG. 7d, in a vertical direction (a y direction), a spacing between two adjacent metasurface units gradually increases from bottom to top. As shown in FIG. 7e, in a vertical direction (a y direction), a spacing between two adjacent metasurface units gradually increases from top to bottom. As shown in FIG. 7f, two adjacent metasurface units in a horizontal direction (an x direction) form one metasurface unit pair, and a distance between two adjacent metasurface unit pairs may change periodically, for example, change periodically based on spacings d1, d2, and d3. A scattering angle of incident light on a z-x plane may be adjusted by changing a distance between two adjacent metasurface unit pairs. As shown in FIG. 7g, a plurality of adjacent metasurface units in a vertical direction (a y direction) form one metasurface unit zone, and a distance between two adjacent metasurface unit zones may change periodically, for example, change periodically based on spacings d1 and d2. A scattering angle of incident light on a z-y plane may be adjusted by changing a distance between two adjacent metasurface unit zones. FIG. 7h to FIG. 7j illustrate three changing patterns on an x-z plane. As shown in FIG. 7h, in a horizontal direction (an x direction), a spacing between two adjacent metasurface units gradually increases from left to right, and a convergence point of light rays incident at different angles is close to a left side of the optical combiner. As shown in FIG. 7i, in a horizontal direction (an x direction), a spacing between two adjacent metasurface units gradually increases from right to left, and a convergence point of light rays incident at different angles is close to a right side of the optical combiner. As shown in FIG. 7j, in a horizontal direction (an x direction), a spacing between two adjacent metasurface units gradually increases from the middle to two sides, and a convergence point of light rays incident at different angles is close to the middle of the optical combiner. In the examples of FIG. 7a to FIG. 7j, a change of the spacing between metasurface units may be linear or nonlinear, and a changing pattern may be set based on a convergence point of light rays.

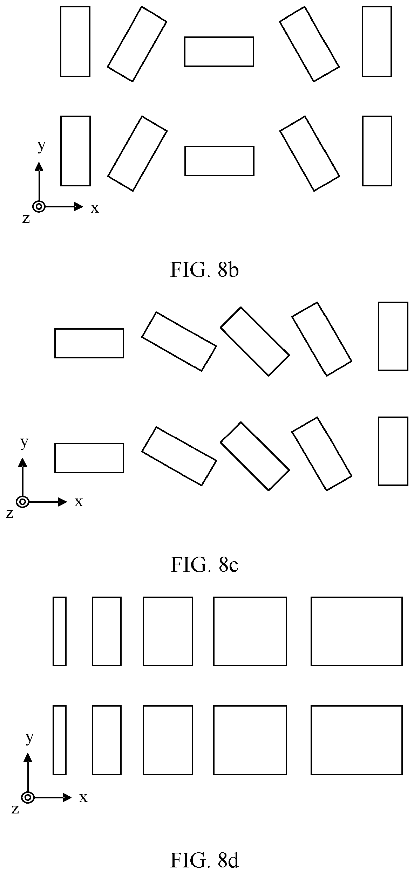

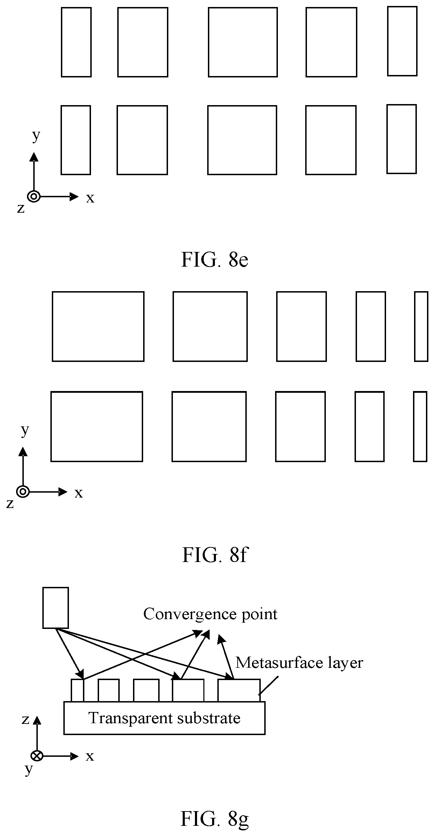

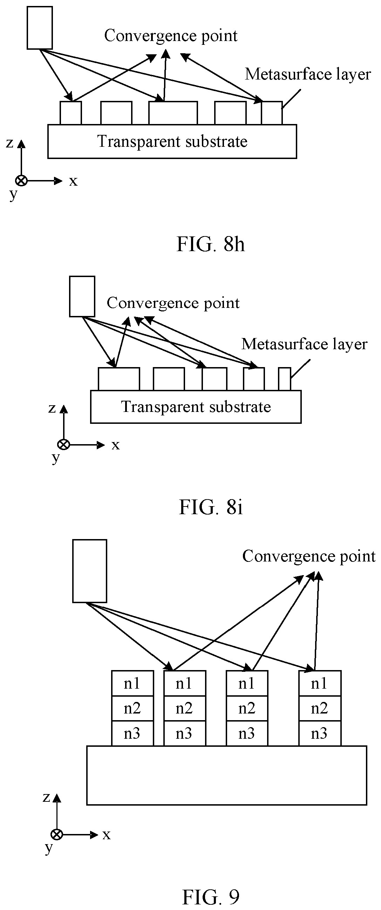

An emergent angle of a light ray on a metasurface layer may be controlled by changing a rotation angle of a metasurface unit or an area of a metasurface unit. FIG. 8a to FIG. 8i are schematic diagrams of nine designs of an optical combiner according to an embodiment of the present invention. FIG. 8a to FIG. 8f illustrate six changing patterns on an x-y plane. As shown in FIG. 8a, in a horizontal direction (an x direction), a rotation angle of a metasurface unit relative to a vertical direction (a y direction) gradually increases from left to right. As shown in FIG. 8b, in a horizontal direction (an x direction), a rotation angle of a metasurface unit relative to a vertical direction (a y direction) gradually increases from two sides to the middle. As shown in FIG. 8c, in a horizontal direction (an x direction), a rotation angle of a metasurface unit relative to a vertical direction (a y direction) gradually increases from right to left. As shown in FIG. 8d, in a horizontal direction (an x direction), an area of a metasurface unit gradually increases from left to right. As shown in FIG. 8e, in a horizontal direction (an x direction), an area of a metasurface unit gradually increases from two sides to the middle. As shown in FIG. 8f, in a horizontal direction (an x direction), an area of a metasurface unit gradually increases from right to left. FIG. 8g to FIG. 8i illustrate three changing patterns on an x-z plane. FIG. 8g may be a view of FIG. 8a or FIG. 8d on the x-z plane, and a convergence point of light rays incident at different angles is close to a right side of the optical combiner. FIG. 8h may be a view of FIG. 8b or FIG. 8e on the x-z plane, and a convergence point of light rays incident at different angles is close to a center of the optical combiner. FIG. 8i may be a view of FIG. 8c or FIG. 8f on the x-z plane, and a convergence point of light rays incident at different angles is close to a left side of the optical combiner. It can be learned that, a convergence point of light rays incident at different angles is close to a position with a relatively large rotation angle of a metasurface unit or a relatively large area of a metasurface unit. In the examples of FIG. 8a to FIG. 8i, a change of the rotation angle or the area of a metasurface unit may be linear or nonlinear, and a changing pattern may be set based on a convergence point of light rays.

An emergent angle of a light ray on a metasurface layer may be controlled by a plurality of layers of materials on the metasurface layer. FIG. 9 is a schematic diagram of a design of an optical combiner according to an embodiment of the present invention. As shown in FIG. 9, in a vertical direction (a z direction), a metasurface layer may include a plurality of layers of materials with different refractive indexes, for example, three layers of materials whose refractive indexes are n1, n2, and n3, respectively. Certainly, the metasurface layer may alternatively include one, two, or more than three layers of materials with different refractive indexes, and a quantity of layers of materials and corresponding refractive indexes may be set based on a convergence point of light rays.

In this embodiment of the present invention, an emergent angle of a light ray can be adjusted by changing one or more conditions such as a spacing between metasurface units, a rotation angle of a metasurface unit, an area of a metasurface unit, and a refractive index of a material of a metasurface layer, thereby implementing a large field of view.

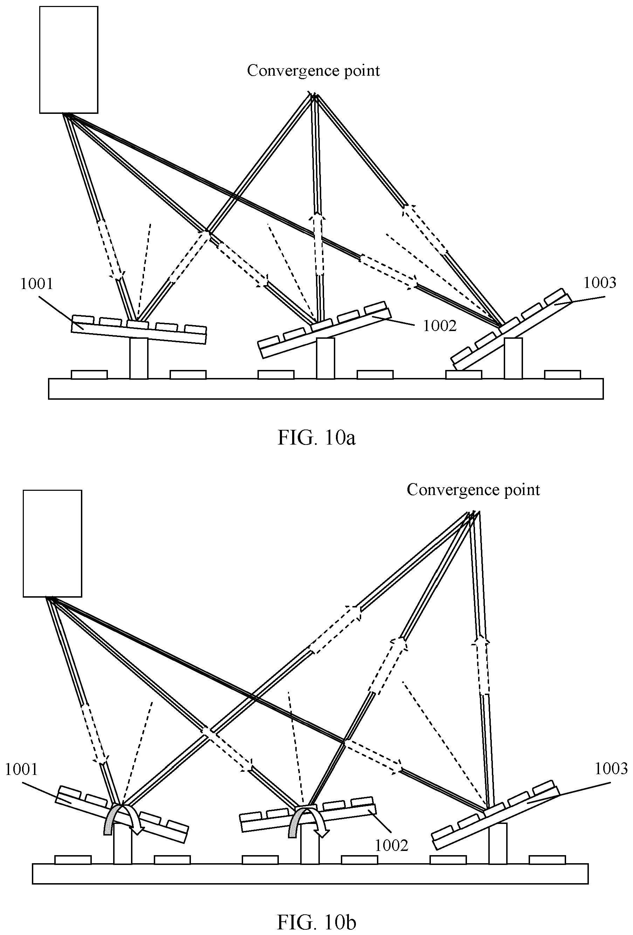

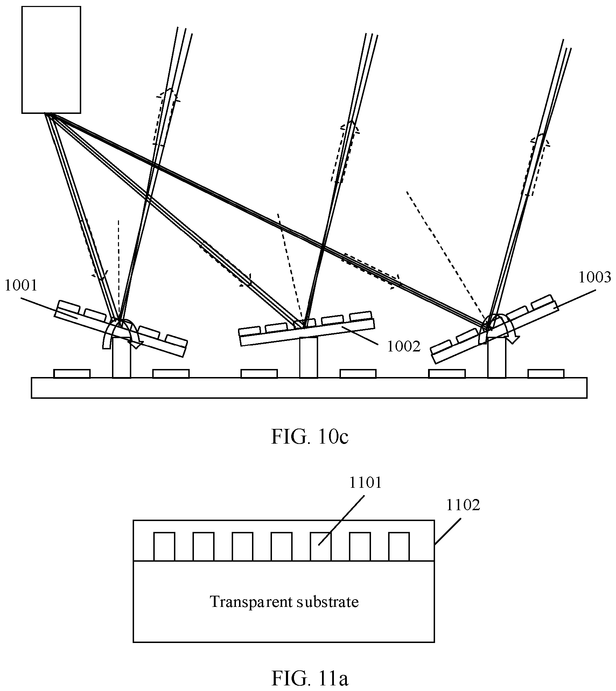

An emergent angle of a light ray on a metasurface layer may be statically configured (that is, set before delivery) or dynamically adjustable. FIG. 10a to FIG. 10c are schematic diagrams of a design of an optical combiner according to an embodiment of the present invention. As shown in FIG. 10a to FIG. 10c, metasurface units may be disposed on a transparent conductive layer, and a material of the transparent conductive layer may be indium tin oxide or tin-doped indium oxide (ITO), PEDOT (PSS or polystyrene sulfonate is a polymer mixture of two ionomers), a silver nanowire, a carbon nanotube, graphene, or another transparent material. The transparent conductive layer may be micro-electro-mechanical systems (Micro-Electro-Mechanical System, MEMS). The transparent conductive layer may be divided into a plurality of regions, for example, three regions 1001, 1002, and 1003. A voltage may be modulated to control one or more regions of the transparent conductive layer to rotate to different directions. For example, as shown in FIG. 10a, in an initial state, a convergence point of light rays is close to a center of the optical combiner. As shown in FIG. 10b, rotation angles of the first region 1001 and the second region 1002 are adjusted to change emergent angles of the light rays, so that the convergence point of the light rays is close to a right side of the optical combiner. As shown in FIG. 10c, the rotation angles of the first region 1001 and the third region 1003 are adjusted to change the emergent angle of the light rays, so that the light rays are emitted in parallel. Through angle adjustment on the transparent conductive layer, an emergent angle of a light ray can be dynamically adjusted, and a depth of field and a focal length can be further dynamically adjusted.

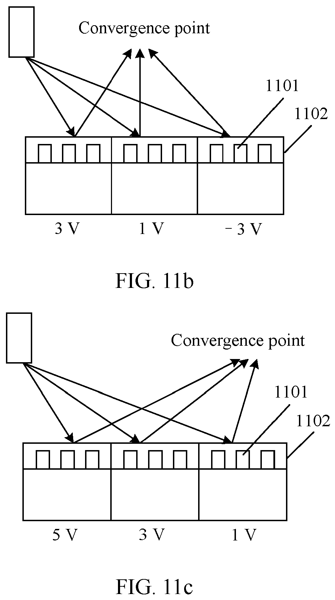

An emergent angle of a light ray can be dynamically adjusted not only by using the transparent conductive layer, but also by covering the refractive index adjustment and control layer on the metasurface layer. FIG. 11a to FIG. 11c are schematic diagrams of a design of an optical combiner according to an embodiment of the present invention. As shown in FIG. 11a to FIG. 11c, a metasurface layer 1101 may be covered by a refractive index adjustment and control layer 1102. The refractive index adjustment and control layer 1102 may be implemented by using a material, for example, liquid crystal (for example, ferroelectric liquid crystal), indium tin oxide, or lithium niobate. The refractive index adjustment and control layer 1102 is divided into a plurality of regions, and a voltage may be applied to the refractive index adjustment and control layer 1102, so that different regions have different refractive indexes, thereby changing an emergent angle of a light ray. For example, as shown in FIG. 11b, the refractive index adjustment and control layer 1102 is divided into three regions, values of applied voltages are respectively 3 V, 1 V, and -3 V, and a convergence point of light rays is close to a center of the optical combiner. As shown in FIG. 11c, the refractive index adjustment and control layer 1102 is divided into three regions, values of applied voltage are respectively 5 V, 3 V, and 1 V, and a convergence point of light rays is close to a right side of the optical combiner. A voltage is applied to the refractive index adjustment and control layer, so that refractive indexes of some or all regions of the refractive index adjustment and control layer may be changed. In this way, an emergent angle of a light ray is dynamically adjusted, and a depth of field and a focal length can be further dynamically adjusted.

In this embodiment of the present invention, a dynamically adjustable element such as the transparent conductive layer or the refractive index adjustment and control layer may be used to dynamically adjust an emergent angle of a light ray, and further dynamically adjust parameters such as a depth of field and a focal length, thereby making a virtual image picture more realistic.

Some of the embodiments may be implemented by using hardware, or a combination of hardware and software or hardware and firmware. When software is used to implement some parts of the embodiments, these parts may be implemented completely or partially in a form of a program product. The program product includes one or more instructions. When the program instructions are loaded and executed on the optical stacker, all or some of the procedures or functions according to the embodiments of the present invention are generated. The instructions may be stored in a readable storage medium, or transmitted from a readable storage medium of one device to a readable storage medium of another device. The readable storage medium may be any usable medium accessible by an optical transceiver, or a data storage device, for example, a server or a data center, integrating one or more usable media. The usable medium may be a magnetic medium (for example, a soft disk, a hard disk, or a magnetic tape), an optical medium (for example, a DVD), a semiconductor medium (for example, a solid-state drive Solid State Disk (SSD)), or the like.

The foregoing descriptions are merely specific implementations of the present invention, but are not intended to limit the protection scope of the present invention. Therefore, the protection scope of the present invention shall be subject to the protection scope of the claims.

## Claims

1. An optical combiner (101, 203, 301, 400), wherein the optical combiner comprises a transparent substrate (202, 402) and a metasurface layer (201, 401, 1101), the metasurface layer is disposed on a surface of the transparent substrate, the metasurface layer comprises a plurality of metasurface units (403) arranged two-dimensionally, two adjacent metasurface units (403) form one metasurface unit pair 404, a spacing between two adjacent metasurface units in the plurality of metasurface units gradually changes along one or two dimensions, and a relative angle between any two adjacent metasurface units is not zero;
wherein the metasurface layer is configured to reflect optical signals in a narrow-linewidth band and transmit optical signals in a broad-linewidth band;
wherein the optical signals in the narrow-linewidth band comprise red, green and blue wavelengths, wherein the optical signals in the narrow-linewidth band that comprise the red, green and blue wavelengths are used to carry a virtual image; and
wherein the optical signals in the broad-linewidth band comprises ambient light or visible light, and wherein the optical signals in the broad-linewidth band that comprises ambient light or visible light are used to carry a realistic image, **characterised in that**
the two metasurface units (403) of each metasurface unit pair (404) are arranged in a V-shape or an inverted-V shape or the two metasurface units (403) of some of the metasurface unit pairs (404) are arranged in a V-shape and the two metasurface units (403) of the other metasurface unit pairs (404) are arranged in an inverted-V shape.

2. The optical combiner according to claim 1, wherein the metasurface layer comprises a plurality of regions, and optical signals corresponding to different regions have different emergent angles, so that optical signals emergent at different angles converge to one point.

3. The optical combiner according to any one of claims 1 to 2, wherein the spacing between two adjacent metasurface units gradually increases or decreases along one or two dimensions.

4. The optical combiner according to any one of claims 1 to 3, wherein a relative angle between two adjacent metasurface units gradually changes along one or two dimensions.

5. The optical combiner according to any one of claims 1 to 4, wherein an area of the metasurface unit gradually changes along one or two dimensions.

6. The optical combiner according to any one of claims 1 to 5, wherein one or more sizes of a length, a width, and a height of the metasurface unit are less than or equal to an operating wavelength of the metasurface unit.

7. The optical combiner according to any one of claims 1 to 6, wherein the two adjacent metasurface units have different heights.

8. The optical combiner according to any one of claims 1 to 7, wherein the metasurface layer comprises at least two layers of materials having different refractive indexes.

9. The optical combiner according to any one of claims 1 to 8, wherein the optical combiner further comprises a transparent conductive layer, the metasurface layer is disposed on the transparent conductive layer, and the transparent conductive layer is configured to control reflection angles of optical signals on the metasurface layer.

10. The optical combiner according to any one of claims 1 to 9, wherein a refractive index adjustment and control layer is covered on the metasurface layer, and the refractive index adjustment and control layer is configured to adjust a refractive index of the metasurface layer to control the reflection angles of the optical signals on the metasurface layer.

11. An augmented reality AR device, wherein the AR device comprises the optical combiner according to any one of claims 1 to 10, at least one projector, and a fixing apparatus, the fixing apparatus is configured to fix the optical combiner and the at least one projector, the optical combiner is configured to reflect the optical signals in the narrow-linewidth band that are generated by the at least one projector and transmit the optical signals in the broad-linewidth band.

12. An augmented reality AR device, wherein the AR device comprises the optical combiner according to any one of claims 1 to 10 and at least one projector, the optical combiner is configured to reflect the optical signals in the narrow-linewidth band that are generated by the at least one projector and transmit the optical signals in the broad-linewidth band.

## Patentansprüche

1. Optischer Kombinierer (101, 203, 301, 400), wobei der optische Kombinierer ein transparentes Substrat (202, 402) und eine Metaoberflächenschicht (201, 401, 1101) umfasst, die Metaoberflächenschicht auf einer Oberfläche des transparenten Substrats angeordnet ist, die Metaoberflächenschicht eine Vielzahl von zweidimensional angeordneten Metaoberflächeneinheiten (403) umfasst, zwei benachbarte Metaoberflächeneinheiten (403) ein Metaoberflächeneinheitenpaar 404 ausbilden, sich ein Abstand zwischen zwei benachbarten Metaoberflächeneinheiten in der Vielzahl von Metaoberflächeneinheiten entlang einer oder zwei Dimensionen graduell ändert und ein relativer Winkel zwischen zwei beliebigen benachbarten Metaoberflächeneinheiten nicht null ist; wobei die Metaoberflächenschicht dazu konfiguriert ist, optische Signale in einem schmalen Linienbreitenband zu reflektieren und optische Signale in einem breiten Linienbreitenband zu übertragen; wobei die optischen Signale in dem schmalen Linienbreitenband rote, grüne und blaue Wellenlängen umfassen, wobei die optischen Signale in dem schmalen Linienbreitenband, welche die roten, grünen und blauen Wellenlängen umfassen, zum Übertragen eines virtuellen Bildes verwendet werden; und
wobei die optischen Signale in dem breiten Linienbreitenband Umgebungslicht oder sichtbares Licht umfassen und wobei die optischen Signale in dem breiten Linienbreitenband, das Umgebungslicht oder sichtbares Licht umfasst, zum Übertragen eines realistischen Bildes verwendet werden, **dadurch gekennzeichnet, dass**
die zwei Metaoberflächeneinheiten (403) jedes Metaoberflächeneinheitenpaars (404) in einer V-Form oder einer umgekehrten V-Form angeordnet sind oder die zwei Metaoberflächeneinheiten (403) einiger der Metaoberflächeneinheitenpaare (404) in einer V-Form angeordnet sind und die zwei Metaoberflächeneinheiten (403) der anderen Metaoberflächeneinheitenpaare (404) in einer umgekehrten V-Form angeordnet sind.

2. Optischer Kombinierer nach Anspruch 1, wobei die Metaoberflächenschicht eine Vielzahl von Regionen umfasst und optische Signale entsprechend den unterschiedlichen Regionen unterschiedliche Austrittswinkel aufweisen, sodass optische Signale, die unter unterschiedlichen Winkeln austreten, an einem Punkt zusammenlaufen.

3. Optischer Kombinierer nach einem der Ansprüche 1 bis 2, wobei der Abstand zwischen zwei benachbarten Metaoberflächeneinheiten entlang einer oder zweier Dimensionen graduell zunimmt oder abnimmt.

4. Optischer Kombinierer nach einem der Ansprüche 1 bis 3, wobei sich ein relativer Winkel zwischen zwei benachbarten Metaoberflächeneinheiten entlang einer oder zweier Dimensionen graduell ändert.

5. Optischer Kombinierer nach einem der Ansprüche 1 bis 4, wobei sich ein Bereich der Metaoberflächeneinheit entlang einer oder zweier Dimensionen graduell ändert.

6. Optischer Kombinierer nach einem der Ansprüche 1 bis 5, wobei eine oder mehrere Größen einer Länge, einer Breite und einer Höhe der Metaoberflächeneinheit kleiner oder gleich einer Betriebswellenlänge der Metaoberflächeneinheit sind.

7. Optischer Kombinierer nach einem der Ansprüche 1 bis 6, wobei die zwei benachbarten Metaoberflächeneinheiten unterschiedliche Höhen aufweisen.

8. Optischer Kombinierer nach einem der Ansprüche 1 bis 7, wobei die Metaoberflächenschicht mindestens zwei Materialschichten umfasst, die unterschiedliche Brechungsindizes aufweisen.

9. Optischer Kombinierer nach einem der Ansprüche 1 bis 8, wobei der optische Kombinierer ferner eine transparente leitfähige Schicht umfasst, die Metaoberflächenschicht auf der transparenten leitfähigen Schicht angeordnet ist und die transparente leitfähige Schicht dazu konfiguriert ist, Reflexionswinkel optischer Signale auf der Metaoberflächenschicht zu steuern.

10. Optischer Kombinierer nach einem der Ansprüche 1 bis 9, wobei eine Schicht zur Anpassung und Steuerung des Brechungsindex auf der Metaoberflächenschicht abgedeckt ist und die Schicht zur Anpassung und Steuerung des Brechungsindex dazu konfiguriert ist, einen Brechungsindex der Metaoberflächenschicht anzupassen, um die Reflexionswinkel der optischen Signale auf der Metaoberflächenschicht zu steuern.

11. Vorrichtung der erweiterten Realität, AR-Vorrichtung, wobei die AR-Vorrichtung den optischen Kombinierer nach einem der Ansprüche 1 bis 10, mindestens einen Projektor und eine Befestigungseinrichtung umfasst, wobei die Befestigungseinrichtung dazu konfiguriert ist, den optischen Kombinierer und den mindestens einen Projektor zu befestigen, der optische Kombinierer dazu konfiguriert ist, die optischen Signale in dem schmalen Linienbreitenband zu reflektieren, die durch den mindestens einen Projektor generiert werden, und die optischen Signale in dem breiten Linienbreitenband zu übertragen.

12. Vorrichtung der erweiterten Realität, AR-Vorrichtung, wobei die AR-Vorrichtung den optischen Kombinierer nach einem der Ansprüche 1 bis 10 und mindestens einen Projektor umfasst, der optische Kombinierer dazu konfiguriert ist, die optischen Signale in dem schmalen Linienbreitenband zu reflektieren, die durch den mindestens einen Projektor generiert werden, und die optischen Signale in dem breiten Linienbreitenband zu übertragen.

## Revendications

1. Combinateur optique (101, 203, 301, 400), dans lequel le combinateur optique comprend un substrat transparent (202, 402) et une couche de métasurface (201, 401, 1101), la couche de métasurface est disposée sur une surface du substrat transparent, la couche de métasurface comprend une pluralité d'unités de métasurface (403) agencées de manière bidimensionnelle, deux unités de métasurface adjacentes (403) forment une paire d'unités de métasurface 404, un espacement entre deux unités de métasurface adjacentes de la pluralité d'unités de métasurface change progressivement le long d'une ou deux dimensions, et l'angle relatif entre deux quelconques unités de métasurface adjacentes n'est pas nul ;
dans lequel la couche de métasurface est configurée pour réfléchir des signaux optiques dans une bande de largeur de ligne étroite et transmettre des signaux optiques dans une bande de largeur de ligne large ;
dans lequel les signaux optiques dans la bande de largeur de ligne étroite comprennent les longueurs d'onde rouge, verte et bleue, dans lequel les signaux optiques dans la bande de largeur de ligne étroite qui comprennent les longueurs d'onde rouge, verte et bleue sont utilisés pour transporter une image virtuelle ; et
dans lequel les signaux optiques dans la bande de largeur de ligne large comprennent la lumière ambiante ou la lumière visible, et dans lequel les signaux optiques dans la bande de largeur de ligne large qui comprend la lumière ambiante ou la lumière visible sont utilisés pour transporter une image réaliste, **caractérisé en ce que**
les deux unités de métasurface (403) de chaque paire d'unités de métasurface (404) sont agencées en forme de V ou en forme de V inversé ou les deux unités de métasurface (403) de certaines des paires d'unités de métasurface (404) sont agencées en forme de V et les deux unités de métasurface (403) des autres paires d'unités de métasurface (404) sont agencées en forme de V inversé.

2. Combinateur optique selon la revendication 1, dans lequel la couche de métasurface comprend une pluralité de régions, et les signaux optiques correspondant à différentes régions ont des angles d'émergence différents, de sorte que les signaux optiques émergents à différents angles convergent vers un point.

3. Combinateur optique selon l'une quelconque des revendications 1 à 2, dans lequel l'espacement entre deux unités de métasurface adjacentes augmente ou diminue progressivement le long d'une ou deux dimensions.

4. Combinateur optique selon l'une quelconque des revendications 1 à 3, dans lequel un angle relatif entre deux unités de métasurface adjacentes change progressivement le long d'une ou deux dimensions.

5. Combinateur optique selon l'une quelconque des revendications 1 à 4, dans lequel une zone de l'unité de métasurface change progressivement le long d'une ou deux dimensions.

6. Combinateur optique selon l'une quelconque des revendications 1 à 5, dans lequel une ou plusieurs tailles d'une longueur, d'une largeur, et d'une hauteur de l'unité de métasurface sont inférieures ou égales à une longueur d'onde de fonctionnement de l'unité de métasurface.

7. Combinateur optique selon l'une quelconque des revendications 1 à 6, dans lequel les deux unités de métasurface adjacentes ont des hauteurs différentes.

8. Combinateur optique selon l'une quelconque des revendications 1 à 7, dans lequel la couche de métasurface comprend au moins deux couches de matériaux ayant des indices de réfraction différents.

9. Combinateur optique selon l'une quelconque des revendications 1 à 8, dans lequel le Combinateur optique comprend également une couche conductrice transparente, la couche de métasurface est disposée sur la couche conductrice transparente, et la couche conductrice transparente est configurée pour commander les angles de réflexion des signaux optiques sur la couche de métasurface.

10. Combinateur optique selon l'une quelconque des revendications 1 à 9, dans lequel une couche de réglage et de commande de l'indice de réfraction est recouverte sur la couche de métasurface, et la couche de réglage et de commande de l'indice de réfraction est configurée pour ajuster un indice de réfraction de la couche de métasurface pour commander les angles de réflexion des signaux optiques sur la couche de métasurface.

11. Dispositif de réalité augmentée AR, dans lequel le dispositif AR comprend le combinateur optique selon l'une quelconque des revendications 1 à 10, au moins un projecteur, et un appareil de fixation, l'appareil de fixation est configuré pour fixer le combinateur optique et l'au moins un projecteur, le combinateur optique est configuré pour réfléchir les signaux optiques dans la bande de largeur de ligne étroite qui sont générés par l'au moins un projecteur et transmettre les signaux optiques dans la bande de largeur de ligne large.

12. Dispositif de réalité augmentée AR, dans lequel le dispositif AR comprend le combinateur optique selon l'une quelconque des revendications 1 à 10 et au moins un projecteur, le combinateur optique est configuré pour réfléchir les signaux optiques dans la bande de largeur de ligne étroite qui sont générés par l'au moins un projecteur et transmettre les signaux optiques dans la bande de largeur de ligne large.
